# EUROPÄISCHE PATENTSCHRIFT

(11) **EP 1 508 542 B1**
(45) Veröffentlichungstag und Bekanntmachung des Hinweises auf die Patenterteilung: **11.10.2006**
(21) Anmeldenummer: 04019651.1
(22) Anmeldetag: 19.08.2004
(51) Int. Cl.: B65G 53/52

(54) **Vorrichtung zum Fördern von abrasiven Schuttgütern**
Device for conveying abrasive bulk products
Dispositif pour transporter des produits abrasifs en vrac

(30) Priorität: 20.08.2003 DE 10338853
(43) Veröffentlichungstag der Anmeldung: 23.02.2005
(73) Patentinhaber: MOTAN Materials Handling GmbH, 88120 Weingarten (DE)
(72) Erfinder: Hertel, Stefan, 88090 Immenstadt (DE)
(74) Vertreter: Riebling, Peter

(56) Entgegenhaltungen:
- DE-B- 1 018 826
- DE-C1- 3 722 911
- US-A- 4 313 699
- US-A- 4 715 748

## Beschreibung

Die Erfindung betrifft eine Vorrichtung zum Fördern von abrasiven Schüttgütern mit herabgesetzter Fördergeschwindigkeit nach dem Oberbegriff des Patentanspruches 1.

In den letzten 30 Jahren wurden Schüttgüter mit den unterschiedlichsten Eigenschaften hauptsächlich mit Hilfe der Bypassventiltechnik transportiert, welche ein Herabsetzen der Förderendgeschwindigkeit von ca. 25 m/sec auf kleiner 10 m/sec erst möglich gemacht hat.

Je nach Rohrleitungswerkstoff wurden die für die Befestigung der Bypassventile notwendigen Anschlussmuffen den Rohrleitungen angepasst:
V2A, Al, St - Rohre erhielten angeschweißte Muffen oder wurden mit Anbohrschellen aus Polyäthylen versehen, bei Gummirohrleitungen setzte sich das Einvulkanisieren von Muffen-Halteblech-Sandwichkonstruktionen durch. Aus USA wurden gegossene Anbohrschellen mit Muffen und Zollgewinde bekannt.

In der DE 37 22 911 C1 wurde ein Baukastensystem mit dem Marktnamen "Etastosplit 2" bekannt gemacht, in dem die Befestigung des Bypassventils an einem Flanschkörper 18 (vergleiche Figur 4/5) erfolgt, wobei der Flanschkörper aus jedmöglichem Werkstoff vorstellbar ist.

Der Verbindungsaufwand einer solchen Förderleitung ist jedoch hoch. Es muss jeweils die Förderleitung an den Flanschkörper abdichtend angeschlossen werden, so dass sich eine "gestückelte" Förderleitung ergibt, weil im Bereich der Förderleitung unterschiedliche, das Fördergut fördernde, Mantelflächen vorhanden sind. Hierdurch ergeben sich jedoch unerwünschte Stoßstellen, die der Spülabrasion ausgesetzt sind, was zu einem schnellen Verschleiß der Leitung führt.

Inzwischen werden von den Anwendern Ventilbefestigungslösungen verlangt, zum Beispiel für die pneumatische Zuführung von geschnittener Glasfaser an die Granulatextruder, die von der bekannten Technik nur unzureichend abgedeckt werden kann. Glasfaser (Quarz) mit Mohssche Härte 7 muss trotz herabgesetzter Endgeschwindigkeit in gehärteten Metallrohrleitungen transportiert werden, um vernünftige Rohrleitungsstandzeiten zu erzielen, zum Beispiel mit Doppelrohren nach dem System Twinpipe. In einem speziellen Fertigungsverfahren werden zwei Stahlrohre unter Temperatur ineinander gefügt, wobei das innere Rohr einer Härtung unterzogen wird. Nachträgliche Wärmeeinbringung durch Anschweißen von Muffen auf dem Außenrohr macht die Härtung des Innenrohres im Schweißbereich zunichte, Kunststoffschellen auf der Verschleißleitung sind irrelevant, da der Kunststoffventilsitz mit der Glasfaser in Berührung kommt, genauso, wie die Graugussschellen aus USA.

Der Erfindung liegt die Aufgabe zugrunde, eine Vorrichtung der eingangs genannten Art so weiterzubilden, dass ein Verschleiß durch abrasive Schüttgüter wie geschnittene Glasfaser an den vielen abstandsabhängigen Ventilbefestigungsstellen einer bypassgeregelten pneumatischen Förderleitung akzeptabel gemindert werden kann.

Zur Lösung der gestellten Aufgabe ist die Erfindung durch die technische Lehre des Patentanspruchs 1 gekennzeichnet.

Durch das Einbringen eines gehärteten Ventilsitzes in die passgenaue, wasserstrahlgefertigte oder gelaserte Bohrung wird der "weiche" Bereich des äußeren Rohres so abgedeckt, dass in den sich bildenden Verbindungsspalten zwischen Innenrohr und Ventilsitz der Verschleiß sich in der Tieflage befindet und somit eine Spülabrasion erfolgreich hinausgezögert werden kann.

Die eigentliche Befestigungsmuffe sitzt mit ihrem O-Ring-gedichteten Sattel auf dem Radius des Außenrohres und ist mit einer simplen Blechspannschelle formund kraftschlüssig, zentriert durch den Ventilsitz, ohne Anschweißen mit dem Außenrohr verbunden.

Wesentlicher Vorteil der Erfindung ist, dass nun eine in ihrer Härte unveränderte und durchgehende Förderleitung beibehalten wird. Es wird auf eine "gestückelte" Förderleitung verzichtet, bei der verschiedenartige Wandmaterialien ineinander gefügt sind.

Bei der erfindungsgemäßen Förderleitung handelt es sich um eine beispielsweise in 6-m-Stücken vorhandene Förderleitung, die dadurch gekennzeichnet ist, dass sie aus zwei ineinander gefügten Rohren besteht, wobei das Innenrohr hochgehärtet ist, während das das Innenrohr umgebende Außenrohr eine normale Härte aufweist.

Durch die technischen Maßnahmen nach der Erfindung wird es nun gewährleistet, dass radial von außen in die Förderleitung eine Ausnehmung hochgenau eingebracht wird. Das Einbringen dieser Ausnehmung erfolgt unter geringer thermischer Belastung der Förderleitung, so dass die Härte des Innenrohres nicht beschädigt oder verändert wird.

Statt der Unterbrechung der Förderleitung durch seriell hintereinander und im Abstand voneinander angeordnete Flansche wird nun lediglich eine radial nach außen gerichtete Ausnehmung in die Förderleitung eingebracht. In diese nach außen gerichtete Ausnehmung wird nun der gehärtete Sockel eines Bypassventils eingesetzt, und zwar möglichst spielfrei und formschlüssig. In diesem Bereich befinden sich keinerlei Dichtungen, und der Sockel darf mit seiner vorderen Stirnkante nicht in den Innenraum des Innenrohres hineinragen. Er muss vielmehr bündig mit der Innenfläche des Innenrohres abschließen, um keine vorstehende Kante zu bilden, welche der Spülabrasion ausgesetzt sein würde.

Daher ist es wichtig, dass die Stirnseite des in das Innenrohr hineinragenden Sockels des Bypassventils bündig mit dem Innenmantel des Innenrohrs abschließt.

Wichtig ist ferner, dass im Bereich der Ausnehmung der Förderleitung und dem Eingriff des Sockels des Bypassventils keine Dichtungen angeordnet sind, sondern diese Dichtungen sind außerhalb dieser Ausnehmung angeordnet. Hierzu wird ein Ventilträger verwendet, der mit einem Sattel bündig auf der Außenfläche der Förderleitung aufsitzt, und in diesem Bereich sitzt der Sockel mit einer radial und/oder axial gerichteten Dichtung auf dem Ventilträger abdichtend auf.

Der Sattel des Ventilträgers ist ferner am Außenumfang des Außenrohres nochmals abgedichtet.

Es können noch weitere radial und/oder axial wirkende Dichtungen zwischen Sockel und Ventilkörper und zwischen Ventilkörper und Ventilträger vorgesehen sein.

Der gesamte Verbund wird mit einer einfachen Schelle zusammengehalten, wodurch sich eine leichte Montage und Demontage ergibt.

Gleichzeitig ergibt sich mit der vorgestellten technischen Lösung auch der Vorteil, dass das Bypassventil insgesamt sehr einfach demontiert werden kann und die das Innen- und Außenrohr durchbrechende, radiale Ausnehmung durch einen Verschlussstopfen verschlossen werden kann. Eine derartige einfache Demontage war beim Stand der Technik nicht möglich.

Im Folgenden wird die Erfindung anhand von lediglich einen Ausführungsweg darstellende Zeichnungen näher erläutert. Hierbei gehen aus den Zeichnungen und ihrer Beschreibung weitere Merkmale und Vorteile der Erfindung hervor.

Es zeigen:
- Figur 1:: Schnitt durch ein Bypassventil mit der Anbringung an einer Förderleitung,
- Figur 2:: der um 90° versetzte Schnitt nach Figur 1.

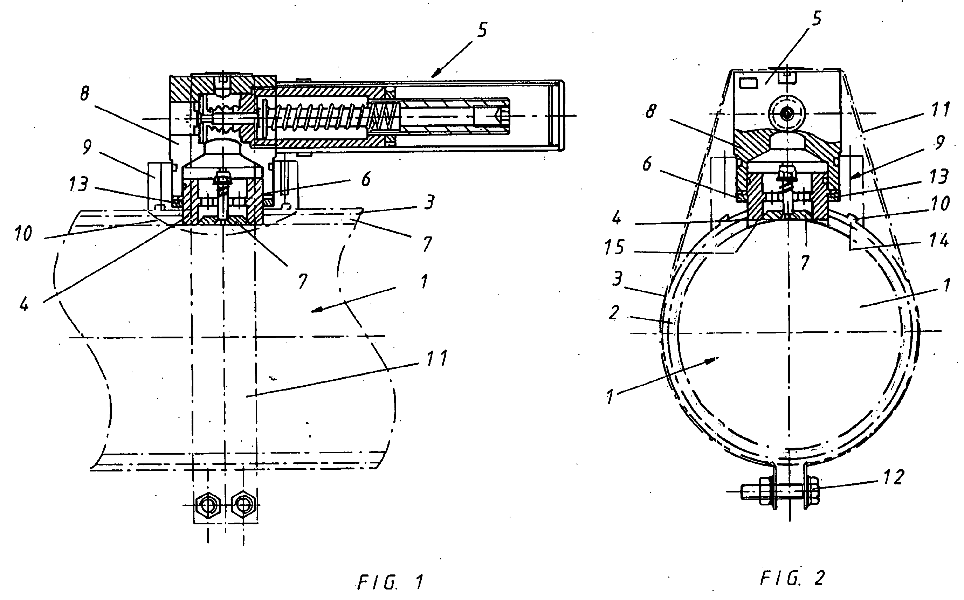

Die Förderleitung 1 nach den Figuren 1 und 2 besteht aus zwei ineinandergefügten Rohren 2, 3. Das Innenrohr 2 ist aus einem hochgehärteten Material und wird an seinem Außenumfang von einem Außenrohr 3 umgeben.

Um nun das Bypassventil 5 abdichtend radial auf den Außenumfang der Förderleitung 1 aufsetzen zu können, wird eine Ausnehmung 4 in die beiden Rohre 2, 3 eingebracht.

Hierbei wird die thermische Belastung beim Einbringen der Ausnehmung 4 so gesteuert, dass die Härte des Innenrohres 2 nicht verändert wird.

Die Ausnehmung 4 ist im übrigen so hochgenau gestaltet, dass der, das Unterteil des Bypassventils 5 bildende Sockel 6 spielfrei formschlüssig und möglichst gut abdichtend in die Ausnehmung 4 hinein passt.

Die vordere, in das Innenrohr 2 hineinragende Stirnseite des Sockels 6 muss bündig mit dem Innenumfang des Innenrohres 2 abschließen. Es dürfen dort keine Vorsprünge, Rücksprünge oder andersartigen Flussunterbrechungen vorhanden sein.

Es ergibt sich zwar gemäss Figur 2 eine kleine Tasche 15 im Zwischenraum zwischen der Unterseite des Sockels 6 und dem Innenrohr 2, diese Tasche ist jedoch nicht weiter schädlich, da sie nach wie vor aus dem gehärteten Material des Innenrohres 2 besteht.

Die Tasche 15 wird umso flacher, je größer der Durchmesser der Förderleitung 1 ist.

Im Innenraum des Sockels 6 ist in an sich bekannter Weise ein Rückschlagventil 7 angeordnet. Wichtig ist jedoch, dass der Sockel 6 ebenfalls aus einem hochgehärteten Material besteht, so dass seine dem Innenrohr 2 zugewandten Flächen nicht abrasiv beschädigt werden können.

Auch ist der Ventilteller des Rückschlagventils 7 aus einem gehärteten Material gefertigt.

Der Ventilkörper 8 des Bypassventils 5 ist mit dem Sockel 6 in an sich bekannter Weise verbunden.

Wichtig ist nun, dass der Sockel 6 in einem außenliegenden Ventilträger 9 aufgenommen ist, welcher die Abdichtung in Richtung auf den Sockel 6 des Bypassventils 5 erbringt.

Zu diesem Zweck ist radial innerhalb des Ventilträgers 9 eine ringsumlaufende Dichtung 13 angeordnet, auf der abdichtend der Sockel 6 mit einem zugeordneten, Flansch erweiterten Durchmessers aufsitzt.

Ferner bildet der Ventilträger 9 einen sich an den Außenumfang des Außenrohres 3 anpassenden Sattel 10, an dem eine weitere ringsumlaufende Dichtung 14 angeordnet ist.

Der gesamte Aufbau ist mit einer, die gesamte Förderleitung 1 umgebenden, Schelle 11 befestigt, die mit einer Verschraubung 12 festgezogen ist.

Auf diese Weise wird ein einfacher, leicht zu montierender und demontierender Aufbau gewährleistet.

### Zeichnungs-Legende

1 Förderleitung
2 Innenrohr
3 Außenrohr
4 Ausnehmung
5 Bypassventil
6 Sockel = Ventilsitz von 7
7 Rückschlagventil-Teller
8 Ventilkörper
9 Ventilträger
10 Sattel
11 Schelle
12 Verschraubung
13 Dichtung
14 Dichtung
15 Tasche

## Patentansprüche

1. Vorrichtung zum pneumatischen Fördern von abrasiven Schüttgütern mit herabgesetzter Fördergeschwindigkeit, beinhaltend eine Förderleitung (1) aus zwei axial ineinander gesteckten Rohren (2, 3), nämlich einem radial innen liegenden Innenrohr (2) und einem radial außen liegenden Außenrohr (3), wobei das Innenrohr (2) im Vergleich zum Außenrohr (3) eine erhöhte mechanische Härte aufweist, und wobei der Innenraum der Förderleitung (1) über ein Bypassventil (5) mit einer externen Leitung oder einem externen Behälter luftschlüssig verbindbar ist, und das Bypassventil (5) einen Rückschlagventil-Teller (7) aufweist, der sich in einem Sockel (6) abdichtend anlegt, **dadurch gekennzeichnet, dass** der Sockel (6) des Bypassventils (5) in einer durch beide Rohre (2, 3) hindurchtretenden Ausnehmung (4) im Wesentlichen spielfrei und formschlüssig eingebracht ist, und eine pneumatische Abdichtung zwischen dem Außenmantel des Sockels (6) und dem Innenraum der Förderleitung (1) außerhalb der Ausnehmung (4) vorgesehen ist, und dass die dem Innenraum der Förderleitung (1) zugewandten Stirnseiten des Sockels (6) und des Rückschlagventil-Tellers (7) gehärtet sind und mindestens teilweise bündig mit dem Innenmantel des Innenrohres (2) abschließen, jedoch nicht in den Innenraum der Förderleitung (1) hinein ragen.

2. Vorrichtung nach Anspruch 1, **dadurch gekennzeichnet, dass** das Bypassventil (5) zum Eintrag von Zuschlagsstoffen wie z.B. Glasfasern vorgesehen ist.

3. Vorrichtung nach Anspruch 1 oder 2, **dadurch gekennzeichnet, dass** die Ausnehmung (4) etwa senkrecht zur Längsachse der Rohre (2, 3) verläuft.

4. Vorrichtung nach Anspruch 1 bis 3, **dadurch gekennzeichnet, dass** das Innenrohr (2) und das Außenrohr (3) zueinander koaxiale oder parallele Längsachsen aufweisen.

5. Vorrichtung nach Anspruch 1 bis 4, **dadurch gekennzeichnet, dass** das Innenrohr (2) gehärtet ist und das Außenrohr (3) normale Härte besitzt.

6. Vorrichtung nach Anspruch 1 bis 5, **dadurch gekennzeichnet, dass** die Abdichtung zwischen dem Außenmantel des Sockels (6) und dem Innenraum der Förderleitung (1) mittels Dichtung (13) erfolgt, die unmittelbar auf der äußeren Mantelfläche des Außenrohres (3) aufliegt.

7. Vorrichtung nach Anspruch 1 bis 5, **dadurch gekennzeichnet, dass** die Abdichtung zwischen dem Außenmantel des Sockels (6) und dem Innenraum der Förderleitung (1) mittels Dichtung (13) erfolgt, die auf einem Ventilträger (9) aufliegt, der über eine weitere Dichtung (14) auf der äußeren Mantelfläche des Außenrohres (3) aufliegt.

8. Vorrichtung nach Anspruch 7, **dadurch gekennzeichnet, dass** der Ventilträger (9) sich mit seinem Sattel (10) bündig an der äußeren Mantelfläche des Außenrohres (3) anlegt und die ringsumlaufende Dichtung (14) im Bereich des Sattels (10) angeordnet ist.

9. Vorrichtung nach Anspruch 7 oder 8, **dadurch gekennzeichnet, dass** die ringsumlaufende Dichtung (13) sich zwischen zwei etwa axial zur Längsachse der Förderleitung (1) sich erstreckenden ringsumlaufenden Flanschen des Sockels (6) und des Ventilträgers (9) befindet.

10. Vorrichtung nach Anspruch 1 bis 9, **dadurch gekennzeichnet, dass** das Bypassventil (5) lösbar an der Förderleitung (1) befestigt ist.

11. Vorrichtung nach Anspruch 10, **dadurch gekennzeichnet, dass** das Bypassventil (5) an der Förderleitung (1) über eine Schelle (11) befestigt ist, welche Schelle (11) die gesamte Förderleitung (1) und mindestens einen Teil des Bypassventils (5) umfänglich umgibt.

12. Vorrichtung nach Anspruch 1 bis 11, **dadurch gekennzeichnet, dass** die Fördergeschwindigkeit zum Fördern der abrasiven Schüttgütern mit herabgesetzter Fördergeschwindigkeit in der Förderleitung (1) kleiner 10 m/s beträgt.

13. Vorrichtung nach Anspruch 1 bis 12, **dadurch gekennzeichnet, dass** die Ausnehmung (4) im Außenrohr (3) und Innenrohr (2) mittels Wasserhochdruckstrahl oder mittels Laser gefertigt ist, unter geringer thermischer Belastung.

14. Vorrichtung nach Anspruch 1 bis 13, **dadurch gekennzeichnet, dass** die Stirnseite des Sockels (6) und die Stirnseite des Rückschlagventil-Tellers (7) sich im Querschnitt gesehen ausschließlich innerhalb des Materials des Innenrohrs (2) befinden und nicht in das Material des Außenrohres (3) hinein ragen.

15. Vorrichtung nach Anspruch 1 bis 14, **dadurch gekennzeichnet, dass** die Form der Stirnseite des Sockels (6), die in die Förderleitung (1) ragt, der Form des Innenmantels des Innenrohrs (2) angepasst ist, also im Querschnitt der Förderleitung (1) gesehen teilkreisförmig ausgebildet ist, so dass sich keine Tasche (15) ergibt.

16. Vorrichtung nach Anspruch 1 bis 15, **dadurch gekennzeichnet, dass** das gehärtete Innenrohr (2) und die gehärteten Stirnseiten des Sockels (6) und des Ventiltellers (7) etwa die gleiche mechanische Härte besitzen.

## Claims

1. Apparatus for pneumatic conveying of abrasive bulk materials at reduced conveying speed, comprising a conveyor conduit (1) consisting of two tubes (2, 3) axially nested one inside the other, viz. a radially inner tube (2) and a radially outer tube (3), the inner tube (2) possessing higher mechanical hardness than the outer tube (3), the interior of the conduit (1) being connectable to an external conduit or external container in an airtight manner by a bypass valve (5), and the bypass valve (5) having a non-return valve disk (7) which seats in a sealed manner in a support (6), **characterized in that** the support (6) of the bypass valve (5) is positively fitted substantially without play in a cutout (4) passing through both tubes (2, 3), and a pneumatic seal between the outer circumferential surface of the support (6) and the interior of the conduit (1) is provided outside the cutout (4), and **in that** the face of the support (6) facing the interior of the conduit (1) and that of the non-return valve disk (7) are hardened and at least partly terminate flush with the internal circumferential surface of the inner tube (2) but do not jut into the interior of the conduit (1).

2. Apparatus according to Claim 1, **characterized in that** the bypass valve (5) is designed for the infeed of admixed materials such as e.g. glass fibres.

3. Apparatus according to Claim 1 or Claim 2, **characterized in that** the cutout (4) extends approximately perpendicularly to the longitudinal axis of the tubes (2, 3).

4. Apparatus according to Claims 1 to 3, **characterized in that** the inner tube (2) and outer tube (3) have longitudinal axes coaxial with or parallel with each other.

5. Apparatus according to Claims 1 to 4, **characterized in that** the inner tube (2) is hardened and the outer tube (3) possesses normal hardness.

6. Apparatus according to Claims 1 to 5, **characterized in that** sealing between the outer circumferential surface of the support (6) and the interior of the conduit (1) is realized by means of a gasket (13) bearing directly on the outer circumferential surface of the outer tube (3).

7. Apparatus according to Claims 1 to 5, **characterized in that** sealing between the outer circumferential surface of the support (6) and the interior of the conduit (1) is realized by means of a gasket (13) bearing on a valve carrier (9) that bears through a further gasket (14) on the outer circumferential surface of the outer tube (3).

8. Apparatus according to Claim 7, **characterized in that** the saddle (10) of the valve carrier (9) rests flush on the outer circumferential surface of the outer tube (3) and the all-round sealing gasket (14) is arranged in the region of the saddle (10).

9. Apparatus according to Claim 7 or Claim 8, **characterized in that** the all-round sealing gasket (13) is located between two surrounding flanges of the support (6) and valve carrier (9) extending approximately axially with respect to the longitudinal axis of the conduit (1).

10. Apparatus according to Claims 1 to 9, **characterized in that** the bypass valve (5) is removably mounted on the conduit (1).

11. Apparatus according to Claim 10, **characterized in that** the bypass valve (5) is mounted on the conduit (1) by a clamp (11) that encircles the entire conduit (1) and at least part of the bypass valve (5).

12. Apparatus according to Claims 1 to 11, **characterized in that** the conveying speed for conveying the abrasive bulk materials at reduced conveying speed in the conduit (1) is less than 10 m/s.

13. Apparatus according to Claims 1 to 12, **characterized in that** the cutout (4) in the outer tube (3) and inner tube (2) is made with reduced thermal loading, by means of a high-pressure water-jet or laser.

14. Apparatus according to Claims 1 to 13, **characterized in that** the end face of the support (6) and that of the non-return valve disk (7), viewed in cross-section, are located entirely within the material of the inner tube (2) and do not project into the material of the outer tube (3).

15. Apparatus according to Claims 1 to 14, **characterized in that** the end face of the support (6) projecting into the conduit (1) conforms to the inner circumferential surface of the inner tube (2), i.e. is shaped as part of a circle when viewed in the cross-section of the conduit (1), so that no pocket (15) is formed.

16. Apparatus according to Claims 1 to 15, **characterized in that** the hardened inner tube (2) and the hardened faces of the support (6) and valve disk (7) possess approximately the same mechanical hardness.

## Revendications

1. Dispositif pour l'acheminement pneumatique à vitesse réduite d'abrasifs en vrac, comprenant une conduite d'acheminement (1) formée de deux tubes (2, 3) emboîtés axialement l'un dans l'autre, à savoir un tube intérieur (2) situé radialement à l'intérieur et un tube extérieur (3) situé radialement à l'extérieur (3), le tube intérieur (2) présentant une dureté mécanique supérieure à celle du tube extérieur (3), l'intérieur de la conduite d'acheminement (1) étant apte à être relié par une soupape de dérivation (5) à une conduite externe ou à un récipient externe de manière étanche à l'air, et la soupape de dérivation (5) présentant une tête de clapet antiretour (7) qui s'applique de manière étanche dans un socle (6),
**caractérisé en ce que** le socle (6) de la soupape de dérivation (5) est introduit quasiment sans jeu et par complémentarité de forme dans un creux (4) qui traverse les deux tubes (2, 3), et il est prévu une étanchéité pneumatique entre l'enveloppe extérieure du socle (6) et l'intérieur de la conduite d'acheminement (1), à l'extérieur du creux (4), et **en ce que** les côtés frontaux du socle (6) et de la tête de clapet antiretour (7) qui sont tournés vers l'intérieur de la conduite d'acheminement (1) sont trempés et se terminent au moins partiellement au ras de l'enveloppe intérieure du tube intérieur (2), mais ne pénètrent pas à l'intérieur de la conduite d'acheminement (1).

2. Dispositif selon la revendication 1, **caractérisé en ce que** la soupape de dérivation (5) est prévue pour l'introduction de matières de charge comme par exemple des fibres de verre.

3. Dispositif selon la revendication 1 ou 2, **caractérisé en ce que** le creux (4) est à peu près perpendiculaire à l'axe longitudinal des tubes (2, 3).

4. Dispositif selon les revendications 1 à 3, **caractérisé en ce que** le tube intérieur (2) et le tube extérieur (3) présentent des axes longitudinaux coaxiaux ou parallèles.

5. Dispositif selon les revendications 1 à 4, **caractérisé en ce que** le tube intérieur (2) est trempé et le tube extérieur (3) présente une dureté normale.

6. Dispositif selon les revendications 1 à 5, **caractérisé en ce que** l'étanchéité entre l'enveloppe extérieure du socle (6) et l'intérieur de la conduite d'acheminement (1) est réalisée à l'aide d'un joint (13) qui est posé directement sur la surface latérale extérieure du tube extérieur (3).

7. Dispositif selon les revendications 1 à 5, **caractérisé en ce que** l'étanchéité entre l'enveloppe extérieure du socle (6) et l'intérieur de la conduite d'acheminement (1) est réalisée à l'aide d'un joint (13) qui est posé sur un support de soupape (9) lui-même posé par l'intermédiaire d'un autre joint (14) sur la surface latérale extérieure du tube extérieur (3).

8. Dispositif selon la revendication 7, **caractérisé en ce que** le support de soupape (9) s'applique avec sa pièce d'appui (10) au ras de la surface latérale extérieure du tube extérieur (3) et le joint circulaire (14) est disposé dans la zone de la pièce d'appui (10).

9. Dispositif selon la revendication 7 ou 8, **caractérisé en ce que** le joint circulaire (13) se trouve entre deux collerettes circulaires du socle (6) et du support de soupape (9) qui s'étendent à peu près axialement par rapport à l'axe longitudinal de la conduite d'acheminement (1).

10. Dispositif selon les revendications 1 à 9, **caractérisé en ce que** la soupape de dérivation (5) est fixée de manière amovible à la conduite d'acheminement (1).

11. Dispositif selon la revendication 10, **caractérisé en ce que** la soupape de dérivation (5) est fixée à la conduite d'acheminement (1) grâce à un collier de serrage (11) qui entoure sur sa circonférence toute la conduite d'acheminement (1) et une partie au moins de la soupape (5).

12. Dispositif selon les revendications 1 à 11, **caractérisé en ce que** la vitesse pour l'acheminement des abrasifs en vrac à vitesse réduite dans la conduite (1) est inférieure à 10 m/s.

13. Dispositif selon les revendications 1 à 12, **caractérisé en ce que** le creux (4) prévu dans le tube extérieur (3) et le tube intérieur (2) est réalisé à l'aide d'un jet d'eau à haute pression ou d'un laser, avec une faible contrainte thermique.

14. Dispositif selon les revendications 1 à 13, **caractérisé en ce que** le côté frontal du socle (6) et le côté frontal de la tête de clapet antiretour (7) se trouvent, vus en section transversale, uniquement à l'intérieur de la matière du tube intérieur (2) et ne pénètrent pas dans la matière du tube extérieur (3).

15. Dispositif selon les revendications 1 à 14, **caractérisé en ce que** la forme du côté frontal du socle (6) qui pénètre dans la conduite d'acheminement (1) est adaptée à la forme de l'enveloppe intérieure du tube intérieur (2), et a donc une forme partiellement circulaire, en section transversale de la conduite (1), ce qui ne forme pas de poche (15).

16. Dispositif selon les revendications 1 à 15, **caractérisé en ce que** le tube intérieur trempé (2) et les côtés frontaux trempés du socle (6) et de la tête de soupape (7) ont à peu près la même dureté mécanique.
